# EUROPEAN PATENT SPECIFICATION

(11) **EP 1 315 267 B1**
(45) Date of publication and mention of the grant of the patent: **13.08.2008**
(21) Application number: 02257996.5
(22) Date of filing: 20.11.2002
(51) Int. Cl.: H02K 1/02, H02K 1/04, H02K 1/27, H02K 15/03

(54) **Permanent magnet for electric motor**
Dauermagnete für elektrische Motoren
Aimants permanents pour moteur électrique

(30) Priority: 22.11.2001 JP 2001356841
(43) Date of publication of application: 28.05.2003
(73) Proprietor: Shin-Etsu Chemical Co., Ltd., Chiyoda-ku, Tokyo (JP)
(72) Inventor: Watanabe, Motoya, Shin-Etsu Chemical Co. Ltd., Fukui-ken (JP); Tobita, Teruaki, Shin-Etsu Chemical Co. Ltd., Fukui-ken (JP); Imamura, Kazuo, Shin-Etsu Chemical Co. Ltd., Fukui-ken (JP)
(74) Representative: Tanner, James Percival

(56) References cited:
- DE-A1- 19 804 488
- DE-C- 852 709
- PATENT ABSTRACTS OF JAPAN vol. 2000, no. 14, 5 March 2001 (2001-03-05) & JP 2000 324736 A (MITSUBISHI ELECTRIC CORP), 24 November 2000 (2000-11-24)
- PATENT ABSTRACTS OF JAPAN vol. 2000, no. 25, 12 April 2001 (2001-04-12) & JP 2001 231201 A (MEIDENSHA CORP), 24 August 2001 (2001-08-24)

## Description

### BACKGROUND OF THE INVENTION

### 1. Field of the invention

The present invention relates to a divided permanent magnet and a motor using the same.

### 2. Description of the related art

In motors, downsizing and weight savings, high power, high efficiency, and high reliability have been demanded. When an alternating magnetic field is applied to a permanent magnet used in a motor, eddy currents occur in the permanent magnet and the permanent magnet generates heat due to the eddy currents thus occurred, resulting in a great loss of the motor. In particular, in terms of a permanent magnet containing iron such as a Nd-Fe-B-based permanent magnet having high energy product, electric conductivity is great. Then, motor efficiency is decreased due to a loss which occurs as a result of higher harmonic eddy currents which flow through such a permanent magnet. Furthermore, a phenomenon in that heats generation of the permanent magnet causes demagnetization of the magnet is observed.

DE19804488 (Mannesmann Sachs AG) relates to a permanent magnet for a motor comprising at least two permanent magnet segments (3) assigned to one of the magnetic poles (25) designed in one-piece fashion and connected by a connecting section. The connecting section extends only over a break-off part of the connected bounding sides of the magnet segments. The width of the individual magnet segments is a multiple of the height of the segments. The connecting section has an extension increasing the height of the magnet segments for spacing away the segments joined together by the connecting section.

DE852709 (Badishe Anilin & Soda-Fabrik) relates to three examples of laminated cores in which the magnetic pieces are electrically separated and mechanically joined together by insulating sheets consisting of an insulating substrate and an adhesive.

### SUMMARY OF THE INVENTION

In order to reduce eddy currents which occur in a permanent magnet, a method has been generally employed, wherein the permanent magnet is divided into a plurality of permanent magnet pieces. The permanent magnet pieces are attached after all, and in such a case, the respective permanent magnet pieces must be electrically insulated so as to prevent eddy currents from flowing across the end faces of neighboring magnet pieces.

Methods for insulation include, for example, a method wherein the surfaces of respective divided permanent magnet pieces are attached after insulation-coating and a method wherein respective permanent magnet pieces are attached and fixed by an insulative adhesive to carry out insulation. However, when permanent magnet pieces are attached and fixed one by one, work to remove adhesive overflows from the attached surfaces becomes necessary, or the overflowed adhesive extends around the neighboring adhering end faces, and the non-targeted ends of the magnet pieces are thereby also fixed, resulting in an unintentional omission of further application of the adhesive, for example. By unintentional omission of further application of adhesive is meant that, if overflow adhesive extends around neighboring non-targeted adhering end faces and such non-targeted end faces are also fixed by such overflow adhesive, then the manufacturer may believe that he has carried out the step of applying adhesive to such non-targeted end faces and may, unintentionally, omit the step of application of adhesive to such end faces. In addition, insulation coating onto the magnet surface increases the number of steps and thus increased costs, which has posed a problem. Furthermore, in some cases, when the thickness of the insulation coating or insulative adhesive is lowered, partial conduction may occur. Thus, insulation performance has not been always perfect.

It is an object of the present invention to easily attach divided magnets of a permanent magnet for a motor and thus to reduce eddy currents which occur in the magnet and ensure insulating performance between the magnet pieces.

As a result of a study of a method for easily and securely adhering division permanent magnet pieces while insulating the same, the inventors discovered that, by carrying out adhesion of joint surfaces between permanent magnet pieces by use of an insulating sheet containing an adhesive, a magnet in which insulation performance is securely ensured and eddy currents are reduced can be manufactured with a high productivity.

More particularly, the present invention provides: a permanent magnet for a motor which comprises at least two magnet pieces and one or more insulating sheets, each sheet comprising an insulating substrate and an adhesive, wherein said one or more insulating sheets are arranged at joint surfaces between the magnet pieces to attach the magnet pieces; wherein said insulating sheet comprises said adhesive at the amount of 30% to 80% by weight based on the amount of said insulating substrate.

According to the present invention, when a permanent magnet for a motor is divided, it is possible to easily and securely carry out insulating and adhesion of magnet pieces. In addition, by the present invention an eddy-current loss can be reduced, thus a high-performance motor can be provided.

### BRIEF DESCRIPTION OF THE DRAWINGS

Fig. 1 is a diagram showing a permanent magnet in which permanent magnet pieces are attached via insulating sheets containing an adhesive.
Fig. 2 is a diagram showing an integrated permanent magnet having a complicated cross-sectional shape.
Fig. 3 is a diagram showing a permanent magnet in which 8-division, plate-like magnet pieces of a Nd-Fe-B sintered magnet are attached and insulated.

### DETAILED DESCRIPTION OF THE PREFERRED EMBODIMENTS

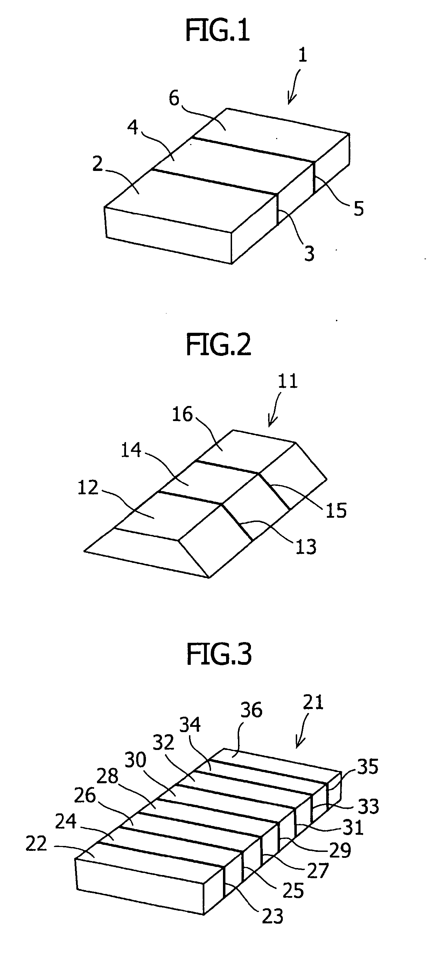

In the present invention, for example, divided permanent magnet pieces 2, 4 and as shown in Fig. 1 are attached and integrated via insulating sheets 3 and 5 containing an adhesive, thus an integrated permanent magnet 1 is constructed. Electric insulation of the divided magnet pieces 2, 4 and 6 of the integrated magnet 1 is mutually ensured.

Herein, the permanent magnet of the present invention may mean a product which comprises two or more magnet pieces in an integrated manner. Such a plurality of magnet pieces may be identical in shape and size to each other or may be different in shape and size from each other.

In the present invention, the dividing number of a permanent magnet is not particularly limited. If the dividing number increases, effects of electric insulation become great, whereby occurrence of eddy currents is further suppressed. On the other hand, an increase in the dividing number can result in an increased cost. Hence, the dividing number may be determined by taking both aspects of the eddy-current suppressing effect and cost into consideration.

The type of magnet used in the present invention is not particularly limited and any materials can be used. For example, Sm-Co sintered magnets, Sm-Co bonded magnets, Nd-Fe-B sintered magnets, Nd-Fe-B bonded magnets and the like, which are high performance rare-earth magnets, can be used. In addition, the presence or absence of a plating film or an insulating coating on the magnet surface is not particularly limited.

It is preferable to use magnet pieces having a thickness of 0.5 to 100mm. If the thickness thereof is too high, the magnet pieces may not be easily handled and adhering work may become difficult. If the thickness thereof is too low, the magnet pieces may not be easily handled and dimensional errors in joints may become great, and in some cases, dimensional accuracy after the adhesion may not be easily obtained.

As an insulating substrate to be used in the present invention, paper, fabric, nonwoven fabric, film, cloth and the like can be mentioned, and preferably, nonwoven fabric, film, or cloth can be used. In particular, an insulating substrate made of an insulating resin having resistivity of 10¹³ to 10¹⁶ Ωcm can be mentioned, although this depends on the thickness. For example, glasscloth; a nonwoven fabric and film selected from polyester, polyamide, polyimide, polyurethane and the like; and the like can be included, which are characteristically impregnated or applied with an adhesive, respectively. In particular, glasscloth is more preferably used.

The thickness of an insulating substrate is preferably 10 to 1000 µm. It is further preferable to select a 50 to 750µm insulating substrate, although this depends on the material, etc. Surface processing such as a plasma treatment or the like may be applied to the surface of such an insulating substrate in advance.

As an adhesive used in the present invention, for example, epoxy adhesives, acrylic adhesives, silicone adhesives, and ceramic adhesives can be included. In particular, from a standpoint of workability, it is preferable to select a heat-curing epoxy adhesive or a quick-drying acrylic adhesive. In particular, Epoxy Resin AV138 (manufactured by Ciba-Geigy Ltd.), Hardlock G55 (manufactured by DENKI KAGAKU KOGYO K.K.) and the like can be included.

Insulating sheets used in the present invention each comprises an insulating substrate and an adhesive.

In particular, when insulating sheets comprising an adhesive are selected, it is necessary to consider usage environment including working temperature and working load of the magnet and costs and to make a selection according to the objective.

In addition, in a case where an integrated magnet attached by insulating sheets is further processed into a final shape, it becomes necessary to select insulating sheets containing an adhesive which have an adhesive strength capable of withstanding the processing.

These insulating sheets containing an adhesive are prepared so as to have a shape identical to the shape of an adhering surface of a magnet piece or to become slightly larger, and are inserted between the magnet pieces which have been processed to have appropriate dimensions according to need. For such an insulating sheet to be inserted between magnets, a method wherein an adhesive is directly applied to a magnet piece and an insulating substrate is attached thereto, a method wherein an adhesive is impregnated into an insulating substrate, and a method wherein an insulating substrate, to which an adhesive has been applied in advance, is inserted between magnet pieces can be included, for example. In consideration of the problem of outflow, it is particularly preferable to use an insulating sheet in which an adhesive has been impregnated.

As an insulating sheet in which an adhesive has been added to an insulating substrate, an insulating sheet in which an adhesive has been comprised at 30 to 80% by weight based on the amount of the insulating substrate is used. If the amount of adhesive is too great, the adhesive may outflow and it may take time to harden the adhesive. On the other hand, if it is too small, magnet pieces may not be integrated, insulation may be insufficient, and in some cases, eddy currents may not be suppressed.

After one or more insulating sheets containing an adhesive are inserted between a predetermined number of two or more magnet pieces, the adhesive is cured at room temperature or by heating, ultraviolet light, etc., and the magnet pieces are integrated. In a case where the adhesive is heated, the adhesive may be heated, for example, to 50 to 250°C. Insulating sheets in which a heat-curing adhesive has been impregnated may be cured by exposing the insulating sheets to an desired temperature in a desired period of time, while using jigs through which an appropriate load is imposed to the adhering surface by a spring plunger, etc. Consequently, secure adhesion may be attained. In addition, in a case of integration, a pressuring load of 0.01 to 10 g/mm² may be imposed according to need.

Permanent magnet pieces are thus integrated by insulating sheets containing an adhesive and become a desired permanent magnet (for example, a permanent magnet 1 shown in Fig. 1). Furthermore, if necessary, the attached magnet pieces may be additionally processed and finished into an integrated permanent magnet 11 which, as shown in Fig. 2, for example, comprises magnet pieces 12, 14 and 16 and insulating sheets 13 and 15 and has a complicated cross-sectional shape. In addition, by adhering magnet pieces and then cutting the same, it may be also possible to manufacture a plurality of permanent magnets by one-time adhering work.

The permanent magnet obtained by adhesion according to the present invention may be used as a permanent magnet for a motor but may be used independently of the motor structure. It may be particularly preferable to apply it to an embedded type motor.

Hereinafter, the present invention will be described by use of examples. However, the present invention is not construed to be limited to these examples.

### Example 1 and Comparative Example 1

As Example, 8-division, plate-like magnet pieces shown in Fig. 3 were obtained from a Nd-Fe-B sintered magnet. The respective magnet pieces (even numbers out of 22-34) had dimensions of 58Lx13Wx12Tmm and had received no surface treatment, and were attached and integrated with a load of 6×10⁻³ kg/mm² via a 0.1mm-thick glasscloth (odd numbers out of 23-35) impregnated with 50% epoxy resin. The glasscoth had a resistance value of 2×10¹⁴ Ωcm.

As Comparative Example 1, similar to Example 1, magnet pieces (even numbers out of 22-34) were attached and integrated by applying a heat-curing epoxy adhesive (Epoxy Resin AV138 manufactured by Ciba-Geigy Ltd.) with 0.1mm thickness.

After integration, electric resistances between the respective magnet pieces 22-24, 24-26, 26-28, 28-30, 30-32, 32-34, and 34-36 were measured.

As a result, electric resistances between the respective magnet pieces of the magnet which is produced by applying only the epoxy adhesive (comparative example) had great unevenness as shown in Table 1 and it was difficult to ensure insulation between all of the respective divided magnets. In contrast thereto, with regards to the integrated magnet which is produced by adhesion of insulating sheets, all electric resistances between the respective magnet pieces showed 40ΩM or more, indicating that insulation was securely carried out. Incidentally, the electric resistances were measured by means of a digital multimeter manufactured by YOKOGAWA.

Furthermore, the work for adhesion and integration in the case where insulating sheets were used could also be more simply and easily carried out, and could be completed in a working time one third as long as that of the adhering work by only an adhesive.

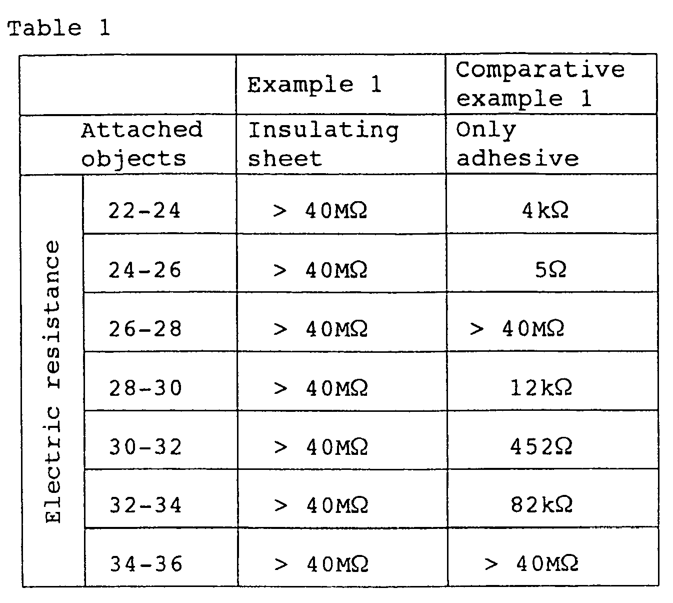

## Claims

1. A permanent magnet for a motor comprising
at least two magnet pieces and
one or more insulating sheets, each sheet comprising an insulating substrate and an adhesive,
wherein said one or more insulating sheets are arranged between joint surfaces of the magnet pieces to attach the magnet pieces; and
wherein said insulating sheet comprises said adhesive at the amount of 30% to 80% by weight based on the amount of said insulating substrate.

2. A permanent magnet for a motor according to Claim 1 wherein said magnet pieces are selected from the group consisting of Sm-Co sintered magnets, Sm-Co bonded magnets, Nd-Fe-B sintered magnets, Nd-Fe-B bonded magnets.

3. A permanent magnet for a motor according to Claim 1 or Claim 2 wherein said insulating substrate is selected from the group consisting of paper, fabric, nonwoven fabric, film and cloth.

4. A permanent magnet for a motor according to any one of Claims 1 to 3 wherein said insulating substrate comprises a insulating resin having resistivity of 10¹³ to 10¹⁶ Ωcm.

5. A permanent magnet for a motor according to any one of Claims 1 to 4 wherein said insulating substrate is selected from the group consisting of glass cloth; and nonwoven fabric and film selected from polyester, polyamide, polyimide and polyurethane; and is impregnated or applied with an adhesive.

6. A permanent magnet for a motor according to any one of Claims 1 to 5 wherein said insulating substrate has a thickness of 10 to 1000 µm and each of said magnet pieces has a thickness of 0.5 to 100 mm.

7. A permanent magnet for a motor according to any one of Claim 1 to 6 wherein said adhesive is an epoxy resin or an acrylic resin.

8. A motor using the permanent magnet according to any one of Claims 1 to 7.

## Patentansprüche

1. Permanentmagnet für einen Motor, welcher folgendes umfaßt:
wenigstens zwei Magnetteile und
eine oder mehrere Isolierfolien, wobei jede Folie ein isolierendes Substrat und ein Klebemittel umfaßt,
wobei die eine oder die mehreren Isolierfolie(n) zwischen aneinanderliegenden Oberflächen der Magnetteile angeordnet ist bzw. sind, um die Magnetteile aneinanderzufügen, und
wobei die Isolierfolie das Klebemittel in einer Menge von 30 Gewichts-% bis 80 Gewichtsbasierend auf der Menge des isolierenden Substrats, umfaßt.

2. Permanentmagnet für einen Motor nach Anspruch 1, wobei die Magnetteile aus der Gruppe ausgewählt sind, bestehend aus gesinterten Sm-Co-Magneten, gebondeten Sm-Co-Magneten, gesinterten Nd-Fe-B-Magneten und gebondeten Nd-Fe-B-Magneten.

3. Permanentmagnet für einen Motor nach Anspruch 1 oder Anspruch 2, wobei das isolierende Substrat aus der Gruppe ausgewählt ist, bestehend aus Papier, Gewebe, nichtgewobenem Gewebe, Film und Stoff.

4. Permanentmagnet für einen Motor nach einem der Ansprüche 1 bis 3, wobei das isolierende Substrat ein Isolierharz mit einem spezifischen Widerstand von 10¹³ bis 10¹⁶ Ωcm umfaßt.

5. Permanentmagnet für einen Motor nach einem der Ansprüche 1 bis 4, wobei das isolierende Substrat aus der Gruppe ausgewählt ist, bestehend aus Glasfasergewebe und nichtgewobenem Gewebe und Film, ausgewählt unter Polyester, Polyamid, Polyimid und Polyurethan, und mit einem Klebemittel imprägniert oder behandelt ist.

6. Permanentmagnet für einen Motor nach einem der Ansprüche 1 bis 5, wobei das isolierende Substrat eine Dicke von 10 bis 1000 µm hat und jedes der Magnetteile eine Dicke von 0,5 bis 100 mm hat.

7. Permanentmagnet für einen Motor nach einem der Ansprüche 1 bis 6, wobei das Klebemittel ein Epoxidharz oder ein Acrylharz ist.

8. Motor, welcher den Permanentmagneten nach einem der Ansprüche 1 bis 7 verwendet.

## Revendications

1. Aimant permanent pour un moteur, comportant
au moins deux pièces d'aimant et
une ou plusieurs feuilles isolantes, chaque feuille comportant un substrat isolant et un adhésif,
dans lequel ladite ou lesdites feuilles isolantes sont agencées de façon que les surfaces de joint des pièces d'aimant soient attachées aux pièces d'aimant ; et
dans lequel ladite feuille isolante comporte ledit adhésif en quantité de 30 % à 80 % en poids sur la base de la quantité dudit substrat isolant,

2. Aimant permanent pour un moteur selon la revendication 1, dans lequel lesdites pièces d'aimant sont choisies dans le groupe constitué d'aimants frittés en Sm-Co, d'aimants liés en Sm-Co, d'aimants frittés en Nd-Fe-B et d'aimants liés en Nd-Fe-B.

3. Aimant permanent pour un moteur selon la revendication 1 ou la revendication 2, dans lequel ledit substrat isolant est choisi dans le groupe constitué de papier, d'étoffe, d'étoffe non tissée, de film et de tissu.

4. Aimant permanent pour un moteur selon l'une quelconque des revendications 1 à 3, dans lequel ledit substrat isolant comprend une résine isolante ayant une résistivité de 10¹³ à 10¹⁶ Ωcm.

5. Aimant permanent pour un moteur selon l'une quelconque des revendications 1 à 4, dans lequel ledit substrat isolant est choisi dans le groupe constitué d'une toile de verre ; et d'une étoffe non tissée et d'un film choisi parmi du polyester, du polyamide, du polyimide et du polyuréthanne ; et est imprégné d'un adhésif ou reçoit par application un adhésif.

6. Aimant permanent pour un moteur selon l'une quelconque des revendications 1 à 5, dans lequel ledit substrat isolant a une épaisseur de 10 à 1000 µm et chacune desdites pièces d'aimant a une épaisseur de 0,5 à 100 mm.

7. Aimant permanent pour un moteur selon l'une quelconque des revendications 1 à 6, dans lequel ledit adhésif est une résine époxy ou une résine acrylique.

8. Moteur utilisant l'aimant permanent selon l'une quelconque des revendications 1 à 7.
